# EUROPEAN PATENT APPLICATION

(11) **EP 4 835 001 A1**
(43) Date of publication of application: **04.11.2026**
(21) Application number: 24913385.1
(22) Date of filing: 26.12.2024
(51) Int. Cl.: C08L 69/00, C08K 5/00, C08K 5/053, C08K 5/52

(54) **POLYCARBONATE RESIN COMPOSITION HAVING EXCELLENT LONG-TERM HEAT RESISTANCE AND OPTICAL PROPERTIES, AND MOLDED ARTICLE COMPRISING SAME**

(30) Priority: 27.12.2023 KR 20230192993
(71) Applicant: Samyang Corporation, Jongno-gu Seoul 03129 (KR)
(72) Inventor: KWON, Soon Yong, Daejeon 34200 (KR); KIM, Sam Jung, Jeonju-si, Jeonbuk-do 54920 (KR); BAE, Do Young, Daejeon 35201 (KR); AN, Tae Jin, Seoul 06664 (KR); JANG, Su Hyuk, Gyeryong-si, Chungcheongnam-do 32801 (KR)
(74) Representative: Gleiss Große Schrell und Partner mbB
(86) International application number: PCT/KR2024/021090
(87) International publication number: WO 2025/143778

(57) **Abstract**

The present invention relates to a polycarbonate resin composition and a molded article comprising same, and, more specifically, to a polycarbonate resin composition and a molded article comprising same, the composition comprising: polycarbonate as a base resin; as a plasticizer component, a polyalkylene glycol adduct of anhydrosugar alcohol, which is a biomass-derived substance; and a phosphorus-based heat stabilizer, and having excellent processability and mechanical properties such as tensile strength while exhibiting excellent long-term heat resistance and optical properties.

## Description

### TECHNICAL FIELD

The present invention relates to a polycarbonate resin composition and an article comprising the same, and more specifically, the present invention relates to a polycarbonate resin composition which comprises polycarbonate as a base resin and polyalkylene glycol adduct of anhydrosugar alcohol that is a biomass-derived material as a plasticizer component, and phosphorus-containing thermal stabilizer, and exhibits excellent long term heat resistance and optical properties while maintaining mechanical properties such as tensile strength, etc. and processability excellently at the same time, and a molded article comprising the same.

### BACKGROUND ART

In order to manufacture light guides used in automobile headlamps, lighting components of various electronic devices, housings, etc. with uniform thickness, a resin with a high melt index is required, and at the same time, the resin should have excellent transmittance, low yellowness index (YI) characteristics, good impact resistance, etc. In addition, as the importance of eco-friendliness has recently emerged, there is a need to develop a resin that is eco-friendly, and satisfies the above properties simultaneously and has improved transparency.

Korean Patent No. 10-2234098 discloses a composition containing polycarbonate and carboxylic acid ester of isosorbide with improved rheology and optical properties, but the disclosed material has a transmittance of only 89% at a thickness of 4 mm and also its YI value exceeds 2, and so it has insufficient properties to be used as a light guide.

In addition, Korean Patent No. 10-1608411 discloses a block copolymer of [poly(isosorbide carbonate and aromatic carbonate-aromatic carbonate)]-[polycarbonate] which is eco-friendly and has high biomass-derived material content and good balance between properties of color, moldability, heat resistance, and impact resistance, but the disclosed material is not intended for implementing properties for use as a light guide, such as improving long term heat resistance and optical characteristics.

Therefore, to overcome the above problems of conventional technologies, it has been requested to develop a resin composition which is eco-friendly and exhibits excellent long term heat resistance and optical properties (i.e., high transmittance and low yellowness index) while maintaining mechanical properties such as tensile strength, etc. and processability excellently at the same time, and thus is particularly suitable for light guide application.

### CONTENTS OF THE INVENTION

### PROBLEMS TO BE SOLVED

The present invention is to resolve the above problems of conventional technologies, and so the purpose of the present invention is to provide a polycarbonate resin composition which is eco-friendly and exhibits excellent long term heat resistance and optical properties (i.e., high transmittance and low yellowness index) as compared with conventional polycarbonate resin composition, and at the same time, excellent mechanical properties such as tensile strength, etc. and processability, and a molded article (particularly, light guide) comprising the same.

### TECHNICAL MEANS

In order to achieve the above-stated purpose, in an aspect, the present invention provides a thermoplastic resin composition, comprising: (1) polycarbonate as a base resin; (2) polyalkylene glycol adduct of anhydrosugar alcohol as a plasticizer component; and (3) phosphorus-containing thermal stabilizer.

In other aspect, the present invention provides a molded article, preferably a light guide, comprising the thermoplastic resin composition of the present invention.

### EFFECT OF THE INVENTION

The thermoplastic resin composition according to the present invention is eco-friendly and exhibits excellent long term heat resistance and optical properties (i.e., high transmittance and low yellowness index) as compared with conventional polycarbonate resin composition, and at the same time, excellent mechanical properties such as tensile strength, etc. and processability, and thus a molded article comprising the same can be used suitably for optical application in various industries, and in particular, it can be used very suitably for use as light guide (more concretely, light guide for automobiles, and even more concretely, light guide for automobile headlamp).

### CONCRETE MODE FOR CARRYING OUT THE INVENTION

The present invention is explained in more detail below.

The thermoplastic resin composition of the present invention comprises (1) polycarbonate as a base resin; (2) polyalkylene glycol adduct of anhydrosugar alcohol as a plasticizer component; and (3) phosphorus-containing thermal stabilizer.

### (1) Base resin: Polycarbonate resin

The polycarbonate resin, which is comprised in the thermoplastic resin composition of the present invention as a base resin, may be an aromatic polycarbonate resin, but there is no special limitation to its kind as long as the technical idea of the present invention can be realized thereby. Any thermoplastic aromatic polycarbonate resin conventionally used in this field can be used.

In an embodiment, the aromatic polycarbonate resin may be prepared from a dihydric phenol, a carbonate precursor and a molecular weight-controlling agent.

The dihydric phenol is one of the monomers constituting the aromatic polycarbonate resin, and it may be a compound represented by the following chemical formula 1.

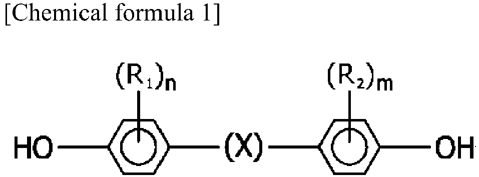

In the above chemical formula 1,
X represents a linear, branched or cyclic alkylene group having no functional group; or a linear, branched or cyclic alkylene group having one or more functional groups selected from the group consisting of sulfide group, ether group, sulfoxide group, sulfone group, ketone group, naphthyl group and isobutylphenyl group (for example, a linear alkylene group having 1 to 10 carbon atoms or a branched or cyclic alkylene group having 3 to 10 carbon atoms);
each of R₁ and R₂ independently represents halogen atom (for example, Cl or Br), a linear, branched or cyclic alkyl group (for example, a linear alkyl group having 1 to 20 (more concretely, 1 to 10) carbon atoms, a branched alkyl group having 3 to 20 (more concretely, 3 to 10) carbon atoms, or a cyclic alkyl group having 3 to 20 (more concretely, 3 to 6) carbon atoms); and
each of m and n independently represents an integer of 0 to 4.

The non-limited example of the above dihydric phenol may be bis(4-hydroxyphenyl)methane, bis(4-hydroxyphenyl)phenylmethane, bis(4-hydroxyphenyl)naphthylmethane, bis(4-hydroxyphenyl)-(4-isobutylphenyl)methane, 1,1-bis(4-hydroxyphenyl)ethane, 1-ethyl-1,1-bis(4-hydroxyphenyl)propane, 1-phenyl-1,1-bis(4-hydroxyphenyl)ethane, 1-naphthyl-1,1-bis(4-hydroxyphenyl)ethane, 1,2-bis(4-hydroxyphenyl)ethane, 1,10-bis(4-hydroxyphenyl)decane, 2-methyl-1,1-bis(4-hydroxyphenyl)propane, or 2,2-bis(4-hydroxyphenyl)propane (bisphenol A), etc., and preferably bisphenol A may be used.

The carbonate precursor is another monomer constituting the aromatic polycarbonate resin, and its non-limited example may be carbonyl chloride (phosgene), carbonyl bromide, bis halo formate, diphenyl carbonate, dimethyl carbonate, etc., and preferably carbonyl chloride (phosgene) may be used.

As the molecular weight-controlling agent, the conventionally known compound, i.e., a monofunctional compound similar to a monomer used in preparation of thermoplastic aromatic polycarbonate resin may be used. The non-limiting examples of the molecular weight-controlling agent may be derivatives based on phenol (for example, para-isopropylphenol, para-tert-butylphenol (PTBP), para-cumylphenol, para-isooctylphenol, para- isononylphenol, etc.) aliphatic alcohols, etc. Preferably, para-tert-butylphenol (PTBP) may be used.

The aromatic polycarbonate resin prepared from such dihydric phenol, carbonate precursor and molecular weight-controlling agent, may be, for example, linear polycarbonate resin, branched polycarbonate resin, copolycarbonate resin, polyestercarbonate resin, etc., and such a resin alone or a mixture of two or more thereof may be used in the present invention.

In an embodiment, the aromatic polycarbonate resin may have a viscosity average molecular weight (Mv, measured in methylene chloride solution at 25°C) of 15,000 to 40,000, more concretely 17,000 to 30,000, and more concretely 20,000 to 30,000. If the viscosity average molecular weight of the aromatic polycarbonate resin is less than 15,000, mechanical properties such as impact strength, tensile strength, etc. may be lowered. To the contrary, if the viscosity average molecular weight of the aromatic polycarbonate resin is greater than 40,000, melt viscosity increases, and thereby problems may be caused in resin processing.

In an embodiment, based on total 100 parts by weight of the thermoplastic resin composition of the present invention, the amount of the polycarbonate base resin in the resin composition may be, for example, 90 parts by weight or more, 91 parts by weight or more, 92 parts by weight or more, 93 parts by weight or more, 94 parts by weight or more, 95 parts by weight or more, 96 parts by weight or more, or 97 parts by weight or more, and it also may be 99.6 parts by weight or less, 99.5 parts by weight or less, 99.4 parts by weight or less, 99.3 parts by weight or less, 99.2 parts by weight or less, 99.1 parts by weight or less, or 99 parts by weight or less.

### (2) Plasticizer component: Polyalkylene glycol adduct of anhydrosugar alcohol

The polyalkylene glycol adduct of anhydrosugar alcohol, which is comprised in the thermoplastic resin composition of the present invention as a plasticizer component, is a compound having a form wherein polyalkylene glycol substituent is attached to the terminal hydroxy group of anhydrosugar alcohol.

The anhydrosugar alcohol can be prepared by dehydration reaction of hydrogenated sugar derived from natural product. Hydrogenated sugar (also referred to as "sugar alcohol") means a compound obtained by adding hydrogen to the reductive end group in sugar, and generally has a chemical formula of HOCH₂(CHOH)ₙCH₂OH wherein n is an integer of 2 to 5. According to the number of carbon atoms, hydrogenated sugar is classified into tetritol, pentitol, hexitol and heptitol (4, 5, 6 and 7 carbon atoms, respectively). Among them, hexitol having 6 carbon atoms includes sorbitol, mannitol, iditol, galactitol, etc. and in particular, sorbitol and mannitol are very useful materials.

The anhydrosugar alcohol may be monoanhydrosugar alcohol, dianhydrosugar alcohol or a mixture thereof, and although it is not especially limited, dianhydrosugar alcohol can be used.

Monoanhydrosugar alcohol is an anhydrosugar alcohol formed by removing one molecule of water from inside of the hydrogenated sugar, and it has a tetraol form with four hydroxyl groups in the molecule. In the present invention, the kind of the monoanhydrosugar alcohol is not especially limited, and it may be preferably monoanhydrohexitol, and more concretely 1,4-anhydrohexitol, 3,6-anhydrohexitol, 2,5-anhydrohexitol, 1,5-anhydrohexitol, 2,6-anhydrohexitol or a mixture of two or more of the foregoing.

Dianhydrosugar alcohol is an anhydrosugar alcohol formed by removing two molecules of water from inside of the hydrogenated sugar, and it has a diol form with two hydroxyl groups in the molecule, and can be produced by using hexitol derived from starch. Because dianhydrosugar alcohol is an environmentally friendly material derived from recyclable natural resources, it has received much interest for a long time and researches on its production continue to proceed. Among such dianhydrosugar alcohols, isosorbide produced from sorbitol has the widest industrial applicability at present.

In the present invention, the kind of the dianhydrosugar alcohol is not especially limited, and it may be preferably dianhydrohexitol, and more concretely 1,4:3,6-dianhydrohexitol. 1,4:3,6-dianhydrohexitol may be isosorbide, isomannide, isoidide or a mixture of two or more of the foregoing.

In a preferable embodiment of the present invention, the anhydrosugar alcohol may be isosorbide.

In an embodiment, the polyalkylene glycol may be polyethylene glycol, polypropylene glycol, polybutylene glycol, or combination thereof.

In an embodiment, the polyalkylene glycol may have a molecular weight (weight average molecular weight) of 500 to 5,000 g/mol, and more concretely 1,000 to 4,000 g/mol, but it is not limited thereto.

In an embodiment, the polyalkylene glycol adduct of anhydrosugar alcohol may be represented by the following formula 2:

[Formula 2] H-[X]ₚ-[O-A-O]-[X']_{q}-H

In the above formula 2,
[O-A-O] is a part derived from anhydrosugar alcohol by removing hydrogen atoms from the both terminal hydroxy groups of the anhydrosugar alcohol,
H-[X] ₚ is independently H-[O-alkylene] ₚ,
[X']_{q}-H is independently [alkylene-O]_{q}-H, and
each of p and q independently represents an integer of 2 to 15.

More concretely, in the above formula 2,
the anhydrosugar alcohol may be isosorbide, and
the alkylene may be a linear or branched alkylene having 3 to 8 carbon atoms, and more concretely, it may be propylene, butylene, or combination thereof, and
each of p and q independently represents an integer of 2 to 12.

In an embodiment, the polyalkylene glycol adduct of anhydrosugar alcohol may be a compound represented by the following formula 3:

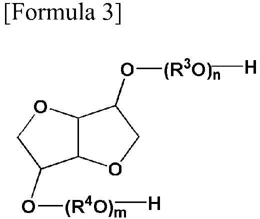

In the above formula 3,
each of R³ and R⁴ independently represents a linear or branched alkylene having 3 to 8 carbon atoms, and
each of m and n independently represents an integer of 2 to 15.

More concretely, in the above formula 3,
each of R³ and R⁴ independently represents propylene group or butylene group, and preferably R³ and R⁴ are the same, and
each of m and n independently represents an integer of 2 to 12.

In an embodiment, for example, as shown in the following reaction schemes, the polyalkylene glycol adduct of anhydrosugar alcohol may be prepared by reacting the hydroxy group at both ends or one end (preferably both ends) of anhydrosugar alcohol with alkylene oxide in the presence of a catalyst (e.g. a base catalyst), and obtained as a compound having a form wherein the hydrogen of the hydroxy group at both ends or one end (preferably both ends) of the anhydrosugar alcohol is substituted with a hydroxyalkyl group which is a ring-opened form of the alkylene oxide.

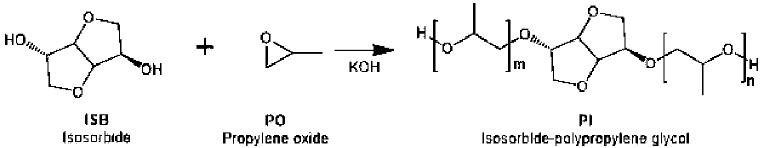

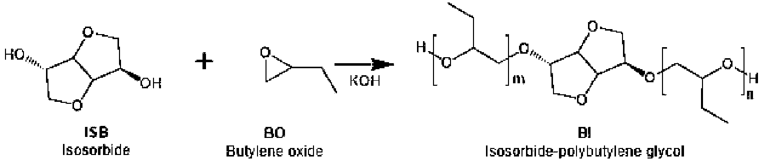

In an embodiment, the alkylene oxide may be a linear or branched alkylene oxide having 3 to 8 carbon atoms, and more concretely, it may be propylene oxide, butylene oxide, or combination thereof.

In an embodiment, the anhydrosugar alcohol may be treated with acid component before the reaction with the alkylene oxide, and the reaction of the acid-treated anhydrosugar alcohol with the alkylene oxide may be conducted, for example, in high pressure reactor capable of being pressurized (for example, pressurized to 3MPa or higher) in the presence of base catalyst (for example, alkali metal hydroxide such as sodium hydroxide, potassium hydroxide, etc. or alkaline earth metal hydroxide such as calcium hydroxide, etc.) at an elevated temperature (for example, 100°C to 180°C, or 120°C to 160°C) during a time of, for example, 1 hour to 8 hours, or 2 hours to 4 hours, but it is not limited thereto. The reaction molar ratio of alkylene oxide to 1 mole of anhydrosugar alcohol may be, for example, 1 mole or more, 2 moles or more, or 3 moles or more, and it also may be 30 moles or less, 20 moles or less, 15 moles or less, or 12 moles or less, and for example, it may be 1 mole to 30 moles, preferably 2 to 20 moles, and more preferably 3 to 15 moles, but it is not limited thereto.

In an embodiment, based on total 100 parts by weight of the thermoplastic resin composition of the present invention, the polyalkylene glycol adduct of anhydrosugar alcohol as a plasticizer component may be comprised in the resin composition in an amount of from greater than 0.3 part by weight to less than 5 parts by weight. If the amount of the polyalkylene glycol adduct of anhydrosugar alcohol in total 100 parts by weight of the thermoplastic resin composition is 0.3 part by weight or less or 5 parts by weight or more, the mechanical properties, long term heat resistance and optical properties of the composition may become poor.

In an embodiment, based on total 100 parts by weight of the thermoplastic resin composition of the present invention, the amount of the polyalkylene glycol adduct of anhydrosugar alcohol as a plasticizer component in the resin composition may be, for example, greater than 0.3 part by weight, 0.4 part by weight or more, 0.5 part by weight or more, 0.6 part by weight or more, 0.7 part by weight or more, 0.8 part by weight or more, 0.9 part by weight or more, or 1 part by weight or more, and it also may be less than 5 parts by weight, 4.9 parts by weight or less, 4.5 parts by weight or less, 4 parts by weight or less, 3.5 parts by weight or less, 3 parts by weight or less, or 2.5 parts by weight or less, but it is not limited thereto.

In an embodiment, the thermoplastic resin composition of the present invention may not comprise polyalkylene glycol as an independent component different from the polyalkylene glycol moiety in the polyalkylene glycol adduct of anhydrosugar alcohol, or may comprise it in an amount of less than 0.5 part by weight (for example, from 0.001 to less than 0.5 part by weight), and preferably the thermoplastic resin composition of the present invention may not comprise the polyalkylene glycol. The polyalkylene glycol herein may be selected from the group consisting of, for example, polyethylene glycol, polypropylene glycol, polybutylene glycol, polypentylene glycol, polyhexylene glycol, polytrimethylene glycol, polytetramethylene glycol, polypentamethylene glycol, polyhexamethylene glycol or combinations thereof.

### (3) Phosphorus-containing thermal stabilizer

The polycarbonate resin composition of the present invention comprises phosphorus-containing thermal stabilizer for improving color of the composition and enhancing heat resistance and resistance to color change thereof.

The phosphorus-containing thermal stabilizer may be pentaerythritol diphosphite-based thermal stabilizer. For example, it may be pentaerythritol diphosphite-based thermal stabilizer containing 4 or more (e.g., 4 to 8), more concretely 5 or more (e.g., 5 to 7) benzene rings.

In an embodiment, the phosphorus-containing thermal stabilizer may be a compound represented by the following formula 4:

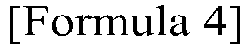

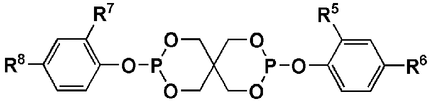

In the above formula 4,
each of R⁵, R⁶, R⁷ and R⁸ is independently C2-C9 alkyl or cumyl, provided that at least two of R⁵ to R⁸ are cumyl.

In an embodiment, the phosphorus-containing thermal stabilizer may be a phosphorus-containing thermal stabilizer containing dicumylphenyl group, and more concretely, it may be bis(2,4-dicumylphenyl)pentaerythritol diphosphite of the following structure:

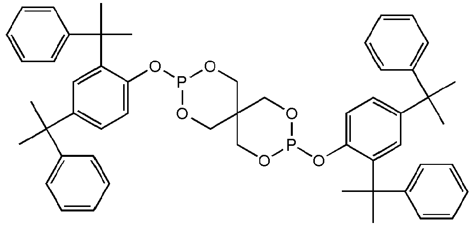

In an embodiment, based on total 100 parts by weight of the thermoplastic resin composition of the present invention, the phosphorus-containing thermal stabilizer may be comprised in the resin composition in an amount of from greater than 0.01 part by weight to less than 5 parts by weight. If the amount of the phosphorus-containing thermal stabilizer in total 100 parts by weight of the thermoplastic resin composition is 0.01 part by weight or less or 5 parts by weight or more, the mechanical properties, long term heat resistance and optical properties of the composition may become poor.

In an embodiment, based on total 100 parts by weight of the thermoplastic resin composition of the present invention, the amount of the phosphorus-containing thermal stabilizer in the resin composition may be, for example, greater than 0.01 part by weight, 0.02 part by weight or more, 0.03 part by weight or more, 0.04 part by weight or more, 0.05 part by weight or more, 0.06 part by weight or more, 0.07 part by weight or more, 0.08 part by weight or more, 0.09 part by weight or more, 0.1 part by weight or more, 0.11 part by weight or more, 0.12 part by weight or more, 0.13 part by weight or more, 0.14 part by weight or more, or 0.15 part by weight or more, and it also may be less than 5 parts by weight, 4.9 parts by weight or less, 4.5 parts by weight or less, 4 parts by weight or less, 3.5 parts by weight or less, 3 parts by weight or less, 2.5 parts by weight or less, 2 parts by weight or less, 1.5 parts by weight or less, 1 part by weight or less, or 0.5 part by weight or less, but it is not limited thereto.

### Optional other additives

In addition to the above-explained components, within the scope capable of achieving the purpose of the present invention, the thermoplastic resin composition of the present invention may further comprise one or more other additives, if necessary.

The kind(s) and amount(s) of such one or more other additives may be easily selected by a skilled artisan according to various purposes. In an embodiment, inorganic filler, lubricant, antioxidant, light stabilizer, hydrolysis stabilizer, releasing agent, colorant, UV stabilizer, antistatic agent, conductivity imparting agent, magnetism imparting agent, crosslinking agent, antibacterial agent, processing aid, anti-friction agent, anti-wear agent or coupling agent may be added alone or as a mixture of two or more to the composition.

As the antioxidant, phenol-type, phosphite-type, thioether-type or amine-type antioxidant may be used, and as the releasing agent, fluorine-containing polymer, silicone oil, a metal salt of stearic acid, a metal salt of montanic acid, montanic acid ester wax, or polyethylene wax may be used. Also, as the UV stabilizer, benzophenone, benzotriazole or amine-type UV stabilizer may be used, and as the colorant, dye or pigment may be used.

For additives other than the above, commercially available general ones may be used. The amount of other additive is not especially limited, and for example, it may be, based on total 100 parts by weight of the composition of the present invention, 0.1 to 5 parts by weight, and more concretely 0.2 to 5 parts by weight, but it is not limited thereto.

The thermoplastic resin composition according to the present invention is eco-friendly because it utilizes anhydrosugar alcohol which is a biomass-derived material, and it exhibits excellent long term heat resistance and optical properties (i.e., high transmittance and low yellowness index) as compared with conventional polycarbonate resin composition, and at the same time, excellent mechanical properties such as tensile strength, etc. and processability, and thus a molded article comprising the same can be used suitably for optical application in various industries, and in particular, it can be used very suitably for use as light guide (more concretely, light guide for automobiles, and even more concretely, light guide for automobile headlamp).

In an embodiment, the thermoplastic resin composition of the present invention may exhibit a transmittance of 90% or higher.

In an embodiment, the thermoplastic resin composition of the present invention may exhibit a yellowness index (YI) of lower than 1.3.

In an embodiment, the thermoplastic resin composition of the present invention may exhibit a transmittance of 89% or higher even after being kept at a temperature of 100°C for 1000 hours.

In an embodiment, the thermoplastic resin composition of the present invention may exhibit a yellowness index of lower than 1.4 even after being kept at a temperature of 100°C for 1000 hours.

As such, the thermoplastic resin composition of the present invention exhibits excellent long term heat resistance and optical properties so that it may exhibit a transmittance of 90% or higher and a yellowness index of lower than 1.3, and exhibit a transmittance of 89% or higher and a yellowness index of lower than 1.4 even after the heat resistance test at a temperature of 100°C for 1000 hours.

Therefore, the other aspect of the present invention provides a molded article comprising the thermoplastic resin composition of the present invention.

The molded article may be an extrusion-molded article or an injection-molded article of the thermoplastic resin composition of the present invention.

In a preferable embodiment, the molded article may be a light guide.

The present invention is explained in more detail through the following Examples and Comparative Examples. However, the scope of the present invention is not limited thereby in any manner.

### EXAMPLES

The components used in Examples and Comparative Examples are as follows.
(A) Polycarbonate resin: 3017 PJ of Samyang Corporation
(B) Polypropylene glycol adduct of isosorbide
   (B-1) PI-1000 (polypropylene glycol's molecular weight: 1000 g/mol)
   (B-2) PI-2000 (polypropylene glycol's molecular weight: 2000 g/mol)
   (B-3) PI-4000 (polypropylene glycol's molecular weight: 4000 g/mol)
(C) Polybutylene glycol adduct of isosorbide
   (C-1) BI-1000 (polybutylene glycol's molecular weight: 1000 g/mol)
   (C-2) BI-2000 (polybutylene glycol's molecular weight: 2000 g/mol)
   (C-3) BI-4000 (polybutylene glycol's molecular weight: 4000 g/mol)
(D) Phosphorus-containing thermal stabilizer: Bis(2,4-dicumylphenyl)pentaerythritol diphosphite (S-9228PC, Dover)
(E) Polyalkylene glycol
   (E-1) Polypropylene glycol (molecular weight: 2000 g/mol)
   (E-2) Polyethylene glycol (molecular weight: 2000 g/mol)
   (E-3) Polybutylene glycol (molecular weight: 4000 g/mol)
(F) Phenol-based thermal stabilizer: Tetrakis[methylene-3-(3,5-di-tert-butyl-4-hydroxyphenyl)propionate]methane (Song1010, Songwon Industrial)

The polypropylene glycol adducts of isosorbide were prepared in a manner of addition reaction of acid-treated isosorbide and propylene oxide at 100°C to 140°C in the presence of KOH as a catalyst, cooling and filtering of the product, and purification thereof by using ion exchange resin. The polybutylene glycol adducts of isosorbide were prepared in the same manner using butylene oxide.

The resin compositions were prepared with the components and amounts for each example shown in the following Table 1 and each comparative example shown in the following Table 2, and then extruded by using a twin-axes melting-kneading extruder with L/D=48 and Φ=25mm under the conditions of melting temperature of 240 to 260°C, screw rotation speed of 150 rpm, first vent pressure of approximately -600 mmHg, and self-feeding speed of 20 kg/h. The extruded strands were cooled in water and then cut by rotating cutter to prepare pellets.

The prepared pellets were dried with hot air at 80°C to 100°C for 4 hours, and then subjected to injection molding at cylinder temperature of 250°C to 280°C and molding temperature of 80°C to prepare samples. The properties of each sample prepared were measured by the methods explained below, and the results thereof are shown in the following Table 1 and Table 2.

The properties of each sample prepared were measured and evaluated by the following methods.
(1) Tensile strength: Evaluated according to ASTM D638
(2) Flexural strength and elastic modulus: Evaluated according to ASTM D790
(3) Impact strength: Evaluated according to ASTM D256 (1/8 inch thickness, notch-Izod)
(4) Thermal deformation temperature: Evaluated according to ASTM D648 with a load of 18.6 kg/cm²
(5) Melt index: Measured according to ASTM D1238 at a temperature of 300°C with a load of 1.2 kgf
(6) Transmittance: The transmittance (%) value of a square sample (90 x 80 x 6.4 mm) was measured according to ASTM D1003 by using Gardner i Haze Meter of BYK Co., Ltd.
(7) YI (Yellowness Index): The YI value of a square sample (90 x 80 x 6.4 mm) was measured by using a spectrophotometer CI 7800SE of X-rite Co., Ltd.
(8) Transmittance after heat resistance test: For the sample kept at a temperature of 100°C for 1000 hours, the transmittance (%) value was measured by the same method as above.
(9) YI after heat resistance test: For the sample kept at a temperature of 100°C for 1000 hours, the YI value was measured by the same method as above.

**[Table 1]**

| | | Examples | | | | | | | | |
|---|---|---|---|---|---|---|---|---|---|---|
| | | 1-1 | 1-2 | 1-3 | 1-4 | 1-5 | 1-6 | 1-7 | 1-8 | 1-9 |
| Amount (part by weight) | (A) | 98.8 | 98.3 | 97.3 | 98.8 | 98.3 | 97.3 | 98.8 | 98.3 | 97.3 |
| | (B-1) | 1 | 1.5 | 2.5 | | | | | | |
| | (B-2) | | | | 1 | 1.5 | 2.5 | | | |
| | (B-3) | | | | | | | 1 | 1.5 | 2.5 |
| | (D) | 0.2 | 0.2 | 0.2 | 0.2 | 0.2 | 0.2 | 0.2 | 0.2 | 0.2 |
| Properties | Tensile strength (MPa) | 66 | 67 | 65 | 67 | 68 | 65 | 67 | 66 | 66 |
| | Flexural strength (MPa) | 95 | 98 | 95 | 98 | 95 | 95 | 98 | 97 | 97 |
| | Elastic modulus (MPa) | 2500 | 2510 | 2550 | 2510 | 2520 | 2500 | 2550 | 2550 | 2510 |
| | Impact strength (J/m) | 61 | 64 | 61 | 62 | 66 | 66 | 61 | 61 | 62 |
| | Thermal deformation temperature (°C) | 125 | 124 | 125 | 125 | 127 | 125 | 125 | 124 | 125 |
| | Melt index (g/min.) | 58 | 60 | 61 | 57 | 61 | 59 | 55 | 57 | 59 |
| | Transmittance (%) | 91.1 | 91.4 | 91.7 | 91 | 91.3 | 91.7 | 91.2 | 91.5 | 91.8 |
| | YI | 1.15 | 1.14 | 1.14 | 1.17 | 1.15 | 1.16 | 1.15 | 1.15 | 1.17 |
| | Transmittance after heat resistance test | 90.4 | 90.2 | 90.4 | 90.1 | 90.1 | 90.6 | 90 | 90.4 | 90.5 |
| | YI after heat resistance test | 1.23 | 1.25 | 1.22 | 1.25 | 1.27 | 1.24 | 1.22 | 1.3 | 1.29 |

**[Table 1] (continued)**

| | | Examples | | | | | | | | |
|---|---|---|---|---|---|---|---|---|---|---|
| | | 2-1 | 2-2 | 2-3 | 2-4 | 2-5 | 2-6 | 2-7 | 2-8 | 2-9 |
| Amount (part by weight) | (A) | 98.8 | 98.3 | 97.3 | 98.8 | 98.3 | 97.3 | 98.8 | 98.3 | 97.3 |
| | (C-1) | 1 | 1.5 | 2.5 | | | | | | |
| | (C-2) | | | | 1 | 1.5 | 2.5 | | | |
| | (C-3) | | | | | | | 1 | 1.5 | 2.5 |
| | (D) | 0.2 | 0.2 | 0.2 | 0.2 | 0.2 | 0.2 | 0.2 | 0.2 | 0.2 |
| Properties | Tensile strength (MPa) | 66 | 67 | 65 | 67 | 68 | 65 | 67 | 66 | 66 |
| | Flexural strength (MPa) | 95 | 98 | 95 | 98 | 95 | 95 | 98 | 97 | 97 |
| | Elastic modulus (MPa) | 2500 | 2510 | 2550 | 2510 | 2520 | 2500 | 2550 | 2550 | 2510 |
| | Impact strength (J/m) | 61 | 64 | 61 | 62 | 66 | 66 | 61 | 61 | 62 |
| | Thermal deformation temperature (°C) | 125 | 124 | 125 | 125 | 127 | 125 | 125 | 124 | 125 |
| | Melt index (g/min.) | 58 | 60 | 61 | 57 | 61 | 59 | 55 | 57 | 59 |
| | Transmittance (%) | 91.1 | 91.2 | 91.1 | 90.8 | 90.9 | 91.1 | 90.8 | 91.1 | 91.4 |
| | YI | 1.15 | 1.16 | 1.14 | 1.17 | 1.17 | 1.17 | 1.16 | 1.16 | 1.18 |
| | Transmittance after heat resistance test | 90.3 | 90.2 | 90.2 | 90 | 90.8 | 90.3 | 90.5 | 89.9 | 90.3 |
| | YI after heat resistance test | 1.31 | 1.29 | 1.27 | 1.33 | 1.27 | 1.25 | 1.3 | 1.28 | 1.25 |

**[Table 1] (continued)**

| | | Examples | | | | | | | | |
|---|---|---|---|---|---|---|---|---|---|---|
| | | 3-1 | 3-2 | 3-3 | 3-4 | 3-5 | 3-6 | 3-7 | 3-8 | 3-9 |
| Amount (part by weight) | (A) | 97.8 | 97.8 | 97.3 | 98.3 | 97.8 | 97.3 | 98.3 | 97.8 | 97.3 |
| | (B-1) | 1.5 | 1.5 | 2 | | | | | | |
| | (B-2) | | | | 1 | 1.5 | 2 | | | |
| | (B-3) | | | | | | | 1 | 1.5 | 2 |
| | (C-1) | 0.5 | | | 0.5 | | | 0.5 | | |
| | (C-2) | | 0.5 | | | 0.5 | | | 0.5 | |
| | (C-3) | | | 0.5 | | | 0.5 | | | 0.5 |
| | (D) | 0.2 | 0.2 | 0.2 | 0.2 | 0.2 | 0.2 | 0.2 | 0.2 | 0.2 |
| Properties | Tensile strength (MPa) | 66 | 67 | 65 | 66 | 67 | 65 | 66 | 67 | 65 |
| | Flexural strength (MPa) | 95 | 98 | 95 | 95 | 98 | 95 | 95 | 98 | 95 |
| | Elastic modulus (MPa) | 2500 | 2510 | 2550 | 2500 | 2510 | 2550 | 2500 | 2510 | 2550 |
| | Impact strength (J/m) | 61 | 64 | 61 | 61 | 64 | 61 | 61 | 64 | 61 |
| | Thermal deformation temperature (°C) | 125 | 124 | 125 | 125 | 124 | 125 | 125 | 124 | 125 |
| | Melt index (g/min.) | 58 | 60 | 61 | 58 | 60 | 61 | 58 | 60 | 61 |
| | Transmittance (%) | 91.1 | 91.2 | 91.1 | 91.1 | 91.2 | 91.1 | 91.1 | 91.2 | 91.1 |
| | YI | 1.15 | 1.16 | 1.14 | 1.15 | 1.16 | 1.14 | 1.15 | 1.16 | 1.14 |
| | Transmittance after heat resistance test | 90.3 | 90.2 | 90.2 | 90.3 | 90.2 | 90.2 | 90.3 | 90.2 | 90.2 |
| | YI after heat resistance test | 1.31 | 1.29 | 1.27 | 1.31 | 1.29 | 1.27 | 1.31 | 1.29 | 1.27 |

**[Table 2]**

| | | Comparative Examples | | | | | | | | |
|---|---|---|---|---|---|---|---|---|---|---|
| | | 1-1 | 1-2 | 1-3 | 1-4 | 1-5 | 1-6 | 1-7 | 1-8 | 1-9 |
| Amount (part by weight) | (A) | 98 | 97.99 | 93 | 94.8 | 99.5 | 98.3 | 98.3 | 98.3 | 98.3 |
| | (B-2) | 2 | 2 | 2 | 5 | 0.3 | | 1.5 | | 1.5 |
| | (E-1) | | | | | | 1.5 | | | 0.5 |
| | (E-2) | | | | | | | | 1.5 | |
| | (D) | | 0.01 | 5 | 0.2 | 0.2 | 0.2 | | 0.2 | 0.2 |
| | (F) | | | | | | | 0.2 | | |
| Properties | Tensile strength (MPa) | 60 | 60 | 57 | 55 | 61 | 62 | 67 | 64 | 66 |
| | Flexural strength (MPa) | 95 | 94 | 88 | 90 | 96 | 95 | 98 | 95 | 96 |
| | Elastic modulus (MPa) | 2500 | 2450 | 2400 | 2400 | 2500 | 2500 | 2510 | 2510 | 2520 |
| | Impact strength (J/m) | 58 | 55 | 15 | 61 | 55 | 58 | 64 | 59 | 62 |
| | Thermal deformation temperature (°C) | 124 | 125 | 118 | 120 | 125 | 125 | 124 | 125 | 126 |
| | Melt index (g/min.) | 57 | 57 | 70 | 68 | 59 | 55 | 60 | 56 | 54 |
| | Transmittance (%) | 88.7 | 88.9 | 85.7 | 85.9 | 88.7 | 88.9 | 91.4 | 89.4 | 90.7 |
| | YI | 1.44 | 1.43 | 1.73 | 1.77 | 1.44 | 1.45 | 1.14 | 1.42 | 1.32 |
| | Transmittance after heat resistance test | 84.2 | 85.4 | 85.8 | 84.9 | 87.4 | 87.6 | 87.5 | 88.1 | 87.8 |
| | YI after heat resistance test | 1.99 | 1.87 | 1.79 | 1.86 | 1.59 | 1.55 | 1.38 | 1.51 | 1.55 |

**[Table 2] (continued)**

| | | Comparative Examples | | | | | | |
|---|---|---|---|---|---|---|---|---|
| | | 2-1 | 2-2 | 2-3 | 2-4 | 2-5 | 2-6 | 2-7 |
| Amount (part by weight) | (A) | 98 | 97.99 | 93 | 94.8 | 99.5 | 98.3 | 98.3 |
| | (C-2) | 2 | 2 | 2 | 5 | 0.3 | | 1.5 |
| | (E-3) | | | | | | 1.5 | |
| | (D) | | 0.01 | 5 | 0.2 | 0.2 | 0.2 | |
| | (F) | | | | | | | 0.2 |
| Properties | Tensile strength (MPa) | 60 | 60 | 57 | 55 | 61 | 62 | 67 |
| | Flexural strength (MPa) | 95 | 94 | 88 | 90 | 96 | 95 | 98 |
| | Elastic modulus (MPa) | 2500 | 2450 | 2400 | 2400 | 2500 | 2500 | 2510 |
| | Impact strength (J/m) | 58 | 55 | 15 | 61 | 55 | 58 | 64 |
| | Thermal deformation temperature (°C) | 124 | 125 | 118 | 120 | 125 | 125 | 124 |
| | Melt index (g/min.) | 57 | 57 | 70 | 68 | 59 | 55 | 60 |
| | Transmittance (%) | 88.4 | 88.5 | 88.4 | 86.4 | 88.4 | 89.1 | 90.5 |
| | YI | 1.44 | 1.43 | 1.73 | 1.77 | 1.44 | 1.45 | 1.19 |
| | Transmittance after heat resistance test | 85.2 | 86.5 | 86.5 | 85.9 | 88.1 | 87.6 | 86.4 |
| | YI after heat resistance test | 2.06 | 1.84 | 1.87 | 1.78 | 1.57 | 1.59 | 1.44 |

As shown in Table 1 above, all of Examples according to the present invention exhibited excellent long term heat resistance and optical properties (i.e., high transmittance and low yellowness index were maintained even after the heat resistance test) as compared with conventional polycarbonate resin composition, and at the same time, the mechanical properties such as tensile strength, flexural strength, elastic modulus and impact strength were also excellent so that well-balanced properties were secured, and thus were suitable for use as light guide for automobiles.

However, as shown in Table 2 above, in case of the Comparative Examples, the long term heat resistance and optical properties were poor (in particular, after the heat resistance test, the transmittance became lower and the yellowness index became higher) and the mechanical properties were also generally insufficient, as compared with the Examples.

## Claims

1. A thermoplastic resin composition, comprising:
(1) polycarbonate as a base resin;
(2) polyalkylene glycol adduct of anhydrosugar alcohol as a plasticizer component; and
(3) phosphorus-containing thermal stabilizer.

2. The thermoplastic resin composition of claim 1, wherein the (1) polycarbonate resin is a thermoplastic aromatic polycarbonate resin.

3. The thermoplastic resin composition of claim 1, wherein the anhydrosugar alcohol in the (2) polyalkylene glycol adduct of anhydrosugar alcohol is isosorbide.

4. The thermoplastic resin composition of claim 1, wherein the polyalkylene glycol in the (2) polyalkylene glycol adduct of anhydrosugar alcohol is polyethylene glycol, polypropylene glycol, polybutylene glycol, or combination thereof.

5. The thermoplastic resin composition of claim 1, wherein the (2) polyalkylene glycol adduct of anhydrosugar alcohol as a plasticizer component is comprised in an amount of from greater than 0.3 part by weight to less than 5 parts by weight, based on total 100 parts by weight of the thermoplastic resin composition.

6. The thermoplastic resin composition of claim 1, which does not comprise polyalkylene glycol as an independent component different from the polyalkylene glycol moiety in the (2) polyalkylene glycol adduct of anhydrosugar alcohol, or comprises the polyalkylene glycol in an amount of less than 0.5 part by weight, based on total 100 parts by weight of the composition.

7. The thermoplastic resin composition of claim 1, wherein the (3) phosphorus-containing thermal stabilizer is pentaerythritol diphosphite-based thermal stabilizer containing 4 or more benzene rings.

8. The thermoplastic resin composition of claim 1, wherein the (3) phosphorus-containing thermal stabilizer is comprised in an amount of from greater than 0.01 part by weight to less than 5 parts by weight, based on total 100 parts by weight of the thermoplastic resin composition.

9. The thermoplastic resin composition of claim 1, which exhibits a transmittance of 90% or higher.

10. The thermoplastic resin composition of claim 1, which exhibits a yellowness index of lower than 1.3.

11. The thermoplastic resin composition of claim 1, which exhibits a transmittance of 89% or higher even after being kept at a temperature of 100°C for 1000 hours.

12. The thermoplastic resin composition of claim 1, which exhibits a yellowness index of lower than 1.4 even after being kept at a temperature of 100°C for 1000 hours.

13. A molded article comprising the thermoplastic resin composition of any one of claims 1 to 12.

14. The molded article of claim 13, which is a light guide.
